# EUROPEAN PATENT APPLICATION

(11) **EP 1 154 624 A2**
(43) Date of publication of application: **14.11.2001**
(21) Application number: 01440123.6
(22) Date of filing: 02.05.2001
(51) Int. Cl.: H04M 3/42, H04Q 7/22

(54) **A method of indicating the geographical location of a mobile user in a data network**

(30) Priority: 08.05.2000 AU PQ733600
(71) Applicant: ALCATEL, 75008 Paris (FR)
(72) Inventor: Quigley, Vincent, Mortdale, New South Wales 2223 (AU); Theertham, Sunil, Dundas, New South Wales 2117 (AU); Nelson, Scott, Cronulla, New South Wales 2230 (AU); Vucic, Mickey, Killara, New South Wales 2071 (AU)
(74) Representative: Dreiss, Fuhlendorf, Steimle & Becker

(57) **Abstract**

An arrangement for identifying the geographical location of a caller in a network by using a gateway to insert an origin identifier tag into the header of the message, the tag including information which the network management system can use to determine the location from which the message originated.

## Description

### Specification

### Technical Field

This invention relates to a technique for determining the geographical location of a subscriber using VoIP via a data network. This has application situations where the user is mobile and it is necessary to know the location of the user, such as Virtual Private Networks (VPN), for example where the system uses a call centre to connect callers to a local service centre.

### Background Art

In the PSTN, the call server for the VPN utilizes a geographical indication of the caller's location to switch a caller to the nearest service point. This information is available from the subscriber's phone number when the subscriber uses the fixed network with Calling Line Identification (CLI). However VoIP calls via data networks do not include a geographical indication, and this means that the caller cannot be automatically be switched to the nearest service point by the call server. This problem is exacerbated by the fact that the user may be using a portable terminal or laptop PC to access the network, so that the terminal may be used in any geographical location.

### Disclosure of the Invention

According to the invention, an "Origin Identifier" tag is added to the message header, the Origin identifier serving to identify the location of the user.

In one embodiment, the origin identifier identifies the access point of the user at the edge of the network.

Preferably the Gateway adds the origin identifier to the User Profile when the user connects to the TAS or Dial Connect RAN.

Preferably the origin identifier is allocated in a manner analogous to exchange service area numbers. A cross Domain Manager may be used to manage the allocation of origin identifiers. The origin identifier is added to a Topology database in each gateway, ready to be added to the User Profile.

By this technique, the location of a user in a VoIP system can be determined even when the user has a mobile terminal plugged into a LAN.

### Brief Description of the Drawings

- Figure 1: shows an example of the architecture of a data network;
- Figure 2: a block diagram exemplifying a gateway implemented using multiplexing techniques;
- Figure 3: is a simplified representation of a call server;
- Figure 4: shows an arrangement of servers and associated databases utilized in the implementation of an embodiment of the invention;
- Figure 5: illustrates a proposed implementation of a Virtual Private Network (VPN) in which the invention may be implemented;
- Figure 6: illustrates call establishment process;
- Figure 7: illustrates elements involved in establishing connections across a VPN;
- Figure 8: illustrates the example of a user connected to the data network via another network such as the PSTN.

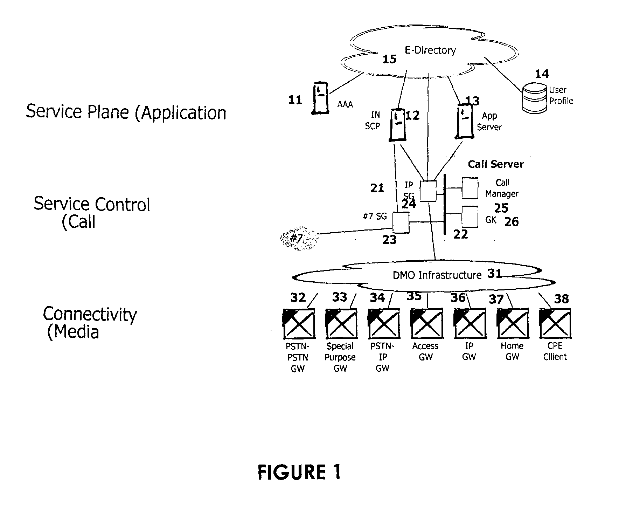

Figure 1 exemplifies a carrier's Next Generation Telephony may be based on a network that separates customer connectivity, service control (call control) and services into distinct layers.
In Figure 1 the Service Layer includes an AAA (Authentication, Authorization and Accounting module 11, IN SCP 12, Application Server 13, and User Profile Database 14, connected to E-Directory 15. The e-Directory supports a distributed database in which a Call Server can retrieve user profile data from whichever SMC supports the specific data. The e-Directory takes care of identifying the host server to the Call Server.

The Service Control Plane includes Call Server 21 including several modules connected to bus 22. The modules include telephony signalling interface, such as #7 Signalling Interface 23, IP Signalling Interface 24, Call Manager 25, and GK 26.

The Connectivity Plane includes Data Network Infrastructure 31, connected to a plurality of Gateways 32 to 38.

The Data Network Infrastructure is connected to the IP SG 24 in the Service Control Plane 21. The IP SG 24 connects to the E-Directory 15, the IN SCP 12, and the Application Server 14 in the Service Plane.

The Media Gateways 32 to 38 provide customer access to the NGT, connectivity between customers within NGT and connectivity between NGT customers and users of other networks - eg. other service provider's networks. Media gateways allow users of NGT to access IP based convergent services in addition to the traditional voice only PSTN services.
Gateway network elements are controlled by the Call Server using a suitable IP protocol - eg:
* MGCP or H.248 for gateways
* H.323 or SIP for CPE clients.

Voice/Fax/DTMF encoding/decoding is performed by the gateways for PSTN-like service delivery, and a variety of codecs are supported - G.711, G.723.1, G.729, G.729a. The gateways can negotiate with peers on codec selection for the media stream for a session. For example, if a gateway detects modem tones indicating a data call or fax call, then the gateways must renegotiate the appropriate session criteria for the call.

The media stream packets for a session are delivered directly between the gateways with the Call Server 21 controlling session set-up and providing the destination IP address to the originating gateway. The media gateways do not signal directly with other gateways for session set-up. All session set-up is handled by the Call Server 21, so that control of the session is policed and unauthorised use of NGT is prohibited. The gateways do signal directly to each other to negotiate session specific parameters such as choice of codec, bandwidth requirements and control of the media stream.

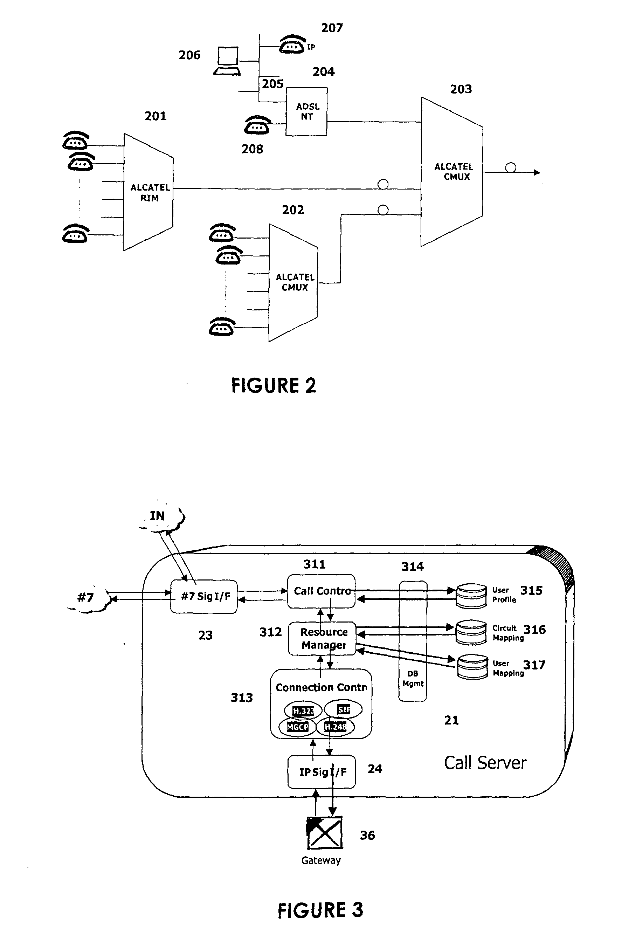

Figure 2 illustrates an embodiment of an access gateway. A number of customer multiplexers 201, 202, may be cascaded into a higher capacity multiplexer for forwarding to the network. In addition, other types of connections can be concentrated into the data stream, such as the voice and data traffic 205, 206, 207, 208, connected via XDSL 204.

Access gateways support directly connected NGT customers that may have either an analog or ISDN fixed access to the gateway, or a dynamic NGT customers using, for example, a PC on an Ethernet segment connected through an ADSL NT.

The Customer Multiplexer (CMUX) 203, with an integrated VoIP module (not shown), acts as an Access Gateway for NGT. Access Gateways translate telephony line signalling events for directly connected users to IP signalling messages (eg. defined by MGCP or H.248) for processing by the Call Server. The CMUX 203 can support either directly connected customers or act as a hub for remote gateways.

PSTN-IP gateways 34 provide connectivity between PSTN/ISDN networks and the NGT IP backbone (eg. DMO base infrastructure). The gateway supports physical connectivity to the
* PSTN network - E1, T1, STM-1, OC-12
* Packet switched network - Ethernet, Frame Relay, ATM STM-1.

Voice encoding/decoding is performed at this interface, and a variety of codecs are supported - G.711, G.723.1, G.729, G.729a.

The individual 64kb/s PSTN channels to each gateway are known to the Call Server and are treated as if they belong to traditional PSTN trunk-groups for resource management and status monitoring. The PSTN/NGT signalling interface is to the Call Server. The signalling messages are delivered directly to call control software within the Call Server and the identity (DPC/CIC) of the PSTN trunk circuit is mapped by the Call Server Resource Manager software to the corresponding Gateway/Port identifier on the PSTN-IP gateway.

Special Purpose Gateways 33 provide capabilities in the NGT to support or enhance basic media gateway functions
Announcements
Tone generation, detection and decoding
Interactive voice response (IVR)
Conference bridging
Lawful Interception.

The gateways provide these functions as high capacity, network based pooled devices, with IP connectivity. When additional network capacity is required, more gateways can be added to the NGT. The Call Server manages selection of the gateway, but signalling control may be also be exercised by Application Servers.

IP gateways 36 provide IP access control to the NGT from other IP networks where no peering entity is available for the Call Server. IP gateways are the physical Point of Interconnect (PoI) to these IP based networks and allow the PoI traffic to be policed/screened by the Call Server. All signalling is routed to the Call Server and per call decisions are made to admit or reject each call.

IP gateways may also provide IP transit capability where required within the NGT to restrict the presentation of true source or destination IP addresses to end points of a connection.

A home gateway 37 provides connectivity to the NGT for Home Networking devices where the home network is known to, and connections managed by the Call Server. This may apply to gateway devices with router capability that directly connect to NGT (via a DMO AAD) or are connected to an ADSL ANT (via CMUX) or use a dial-up connection. The home gateway may represent either
* a single service (with a single NGT IP address) where the devices within the home network are not individually recognised by the Call Server, or
* as multiple services, for which NGT IP addresses are assigned to the devices and each is known to the Call Server.
NGT will also support directly connected PC clients and specialised Customer Premises equipment CPE (IP phones) clients that support a client end-point protocol such as H.323 or SIP. These clients will register with the Call Server's H323 gatekeeper or SIP server to be recognised as on-line NGT customers.

Any PSTN/ISDN exchange that can provide MGCP/H.248 control of its ports can also be considered a PSTN-PSTN gateway.

The processing core of the NGT is the Call Server. All NGT calls are managed by a Call Server. Each Call Server will control a set of Media Gateways within its pre-defined geographic region. The Call Server:
* handles all signalling events
* manages session control for all calls including, H.323 Gatekeeper functions and, SIP server functionality
* provides PSTN/ISDN supplementary services for NGT customers
* supports a cached user database for all users currently 'connected' to NGT
* handles per call authorisation
* determines and initiates call Quality of Service criteria
* executes the Intelligent Network interworking function
* executes the Application Server interworking function
* provides accounting information for all calls
* collects performance and event statistics.

Figure 3 illustrates a simplified Call Server's call handling functions.

The Call Server 21 includes IP Signalling Interface 24, Connection Control module 313, Resource Manager 312, Call Control 311, Database Manager 314, and User Profile db 315, Circuit Mapping db 316, and User mapping db 317, as well as #7 Signalling Interface 23.

The Call Server manages all calls within NGT. As shown in the above diagram, the Call server has three main software functions for managing a call.

Call Control 311 handles the progress of the call, responding to and initiating signalling events to connected NGT entities. The connected entities may be Media gateways, NGT directly connected customers, other Call Servers or Application Servers.

Call Control 311 does not recognise the different types - they are all treated in the same way. Input signalling events are processed by the call control logic and output signalling events are triggered. The call is actually treated as two (or more) half-call legs, and a service logic instance is created for each. This allows each end-point of the call to be treated independently with originating requirements for the call treated separately from terminating requirements.

Call Control 311 also supports INAP CS2 and so can deliver to NGT all of the IN services which are currently available to the PSTN/ISDN. CS2 offers additional functions that can be utilised by Application Servers.

### This has the following advantages:

The carrier has a substantial investment in the PSTN/ISDN services currently in the network. This investment is re-used. With the Call Server as the call control engine for NGT, all the services your customers are familiar with are provided. Migration of those customers to NGT does not require massive new software development to obtain this functionality.

The Call Server call control engine may be based on the full ITU CS2 Call State Model required to support IN-SCP interaction with the Call Server. The Carriers existing IN services are automatically available to NGT customers.

The foundation is laid for control of the existing Alcatel S12 switches as PSTN-PSTN gateways from the Call Server. The NGT Call Server can provide call control for S12 remotely, treating the exchange as a large gateway. The call control engine will be the same for both yielding significant operational cost savings in maintaining a common software platform and unifying services between the two environments. The modular structure of System 12 software lends itself readily to this restructuring of the software interfaces to migrate call control from System 12 to the Call Server. This migration need not be planned as a separate activity but can be combined with the next System 12 software release - SAS 6. The System 12 exchanges now act as an NGT media gateway with PSTN gateway functionality built in.

The Call Server delivers existing PSTN equivalent services and additional features. The Call Server Call Control 311 manages the gateways to establish multi-media connections and converged services also. The same hooks into call control used by IN can also be used by an Application Server to deliver new converged services.

The Resource Manager 312 maintains a view of all circuits in all gateways and all directly connected users under its control, and their availability. Trunking gateways are treated as 'trunk groups' and a single 'trunk group' may relate to one IP address for a gateway, or may share an IP address with other 'trunk groups' on the same gateway. Associating circuits with different trunk groups allows different circuits connected to the same gateway to be managed separately.

Individual NGT users are identified by either,
their gateway/port identifier and its corresponding IP address
the IP address of their client (PC or IP phone/device).

Having resolved the destination to an IP address, the Resource Manager 312 requests the Connection Manager to inform the originating gateway or end-point of the destination IP address and establish a media session between the two. The Connection Control function 313 will invoke the appropriate signalling scheme (eg MGCP, H.323, SIP) to complete the call.

Connection Control 313 handles all signalling interactions with the gateways and users on behalf of Call Control 311. Events detected by the gateways, such as the equivalent of 'off-hook' or digit collection, are packaged by the gateway into the appropriate signalling message and delivered to Connection Control 313 across the IP network. Connection Control 313 decodes the messages from their native protocol (eg MGCP/H.248/H.323) to a generic equivalent to pass to Call Control 311. This transaction occurs in reverse when a gateway is instructed to take on action (eg establish a media connection to another gateway).

The media gateways do not control any of the service logic in NGT - they are not responsible for delivering any of the services -including PSTN like supplementary services. The gateways collect information from users and create connections on demand. All control of services is managed by the Call Server 21, with possible interaction with IN and Application Servers 12, 13.

The Service Plane of NGT includes a number of application platforms. One of these is an Intelligent Network. The Alcatel IN platform is accessible from the PSTN and it interfaces to the Call Server 21 also.

The Alcatel A1135 SMC (Service Management Centre), utilized as the combined AAA server 11 and NGT User Profile database 315, also deliver value added services Dial Connect and Voice over IP products.

This layer of the network supports a variety of server platforms from a number of vendors by the use of an open platform environment.

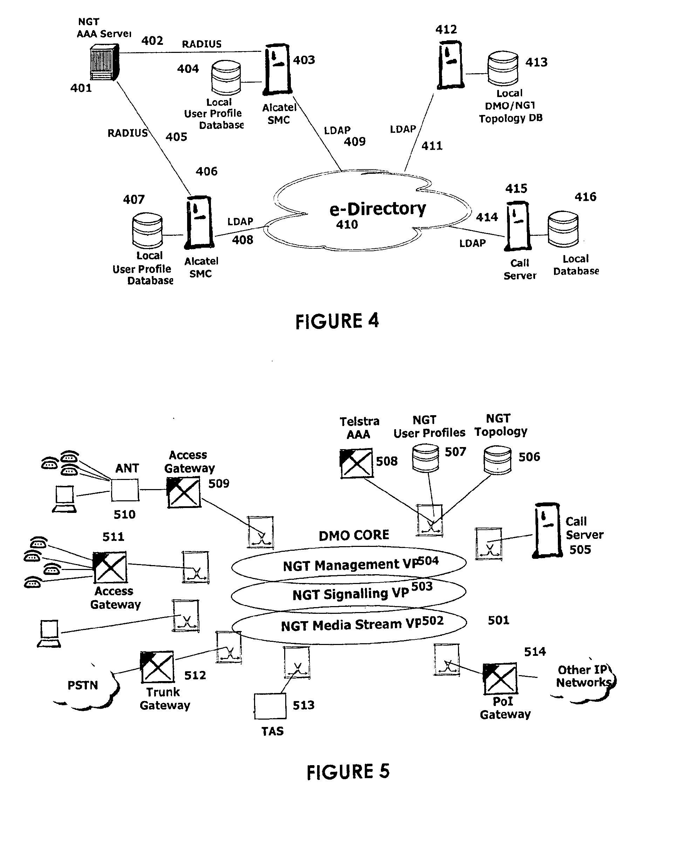

Figure 4 shows the AAA (Authentication, Authorisation and Accounting) server 11 is used to authenticate users for DMO access.

The AAA server 401 connects to a number of SMCs (two of which, 403, 406, are shown) via, eg, RADIUS links 402, 405. Each SMC has an associated Local User Profile Database 403, 407. The SMC connect to E-Directory via, eg, LDAP links 409, 408. The E-Directory 410 is also connected to a Local Network Server 412 with Network/NGT Topology DB 413, and Call Server 415 with Local DB 416.

The Service Management Centres (SMC) provide AAA proxy and DHCP server function to corporate networks and service provider networks. Each is represented as a separate VPN and the SMC database allocates IP addresses (static or dynamic) from the available pool for their VPN.

The SMC may be used as the AAA server for NGT (or as the proxy to an NGT AAA server). The SMC (403, 407) can support large database applications, and so the NGT User Profile database (404, 406) resides on the SMC also. As the NGT user database grows, additional SMCs can be added to the network.

The NGT User Profile database will be accessible through the carrier's e-Directory initiative. The Call Server and the SMC both support LDAP and this can be used to access information in the User Profile Database, the SMC database (relating to authentication of users) and if necessary, the DMO topology database.

The e-Directory 410 supports a distributed database in which a Call Server can retrieve user profile data from whichever SMC supports the specific data. The e-Directory takes care of identifying the host server to the Call Server.

In an embodiment of the network NGT utilises the digital network's IP-VPNs to provide separate VPNs for NGT signalling 503, NGT media streams 502 and NGT management traffic 504, as shown in Figure 5.

Separate Virtual Private Networks (VPNs) provide policy control over the establishment of calls within the NGT.

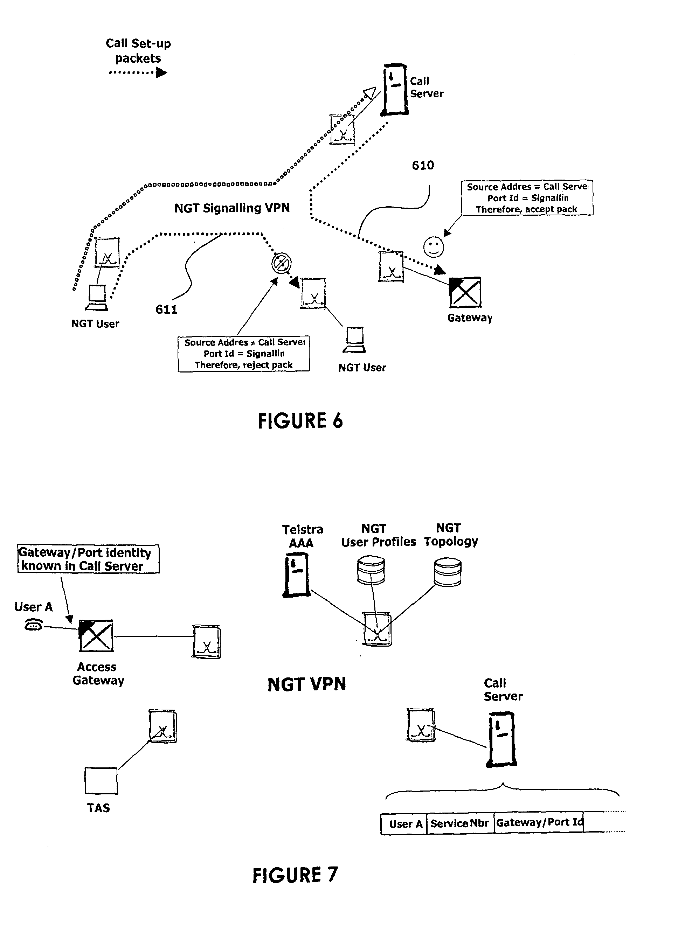

In Figure 6, the signalling VPN includes all directly connected users and gateways and Call Servers and exists to ensure that all calls are managed by NGT Call Servers and appropriately billed. Terminating signalling packets are policed at the edge of the VPN to ensure that the source is an NGT Call Server ( see link 610). If not, the packets are discarded (611) as they do not represent a valid NGT call set-up.

When call set-up has been established through signalling, after the Call Server has authorised the call to proceed, the end points in the call will establish a UDP media stream (using RTP- Real Time Streaming Protocol) to exchange packets. These packets are carried on the NGT Media Stream VPN. The Media Stream VPN is responsible for implementing the appropriate Quality of Service (QoS) guarantees for the call and secures NGT traffic from all other traffic within the DMO.

The VPNs discussed here represent the public NGT VPN infrastructure. The use of NGT VPNs for NGT traffic does not exclude the provision of separate VPNs for the equivalent of private NGT networks. Private IP telephony networks can be provisioned in exactly the same way as data VPNs may be established for DMO customers.

Authentication of users as an issue extends beyond NGT. A universally applicable, complete and secure authentication process involves the application of secure IP encapsulation using IPsec, Public Key Infrastructure and Certificate Authorities. The authentication of NGT users and how this is handled to authorise their network access is relevant to this invention. NGT utilizes on DMO IP-VPNs and for authentication we use the capabilities of DMO also.

For NGT users, authentication concerns gaining access to the NGT VPNs (media and signalling) and providing NGT with a means of identifying the end user securely and reliably and being able to charge for services.

NGT access will be discussed with reference to three types of users.

NGT customers that are semi-permanently connected to the NGT infrastructure. These users have dedicated access connections via an access or home gateway. The access connection is known within the Call Server by its gateway/port identity, as each access point is managed as a resource. These customers do not require authentication before they can place a call within the NGT as they are, in effect, permanently authenticated. The access identity can be associated with an assigned service number (E.164 number) by the Call Server. In effect the access gateway is pre-authenticated and as users assigned to this access device, the users are authenticated by default.

This type of customer is shown as User A in Figure 7. The gateway's ATM Virtual Path Identity (VPI) and the user's Virtual Circuit Identity (VCI) were created at the time of provisioning and are available in the Topology database. The user's identity - username, service number, aliases, IP address, gateway and port identifiers, as well as service profile details were also created at the time of provisioning and are available in the user profile database. This information is also copied into the Call Server managing the gateway so this data does not have to be retrieved for each call.

This does not exclude the possibility of any NGT customer using this physical port to access the NGT. This is similar to a calling card application within the PSTN and in this instance it can be treated as such by the service layer of the NGT network. The Call Server makes this service available as the Call Server can access existing IN services using INAP CS2 signalling.

Whilst calling card has been used as an example, smart cards or i-buttons could be used to achieve the same outcome with a more intelligent terminal. The ability of the Call Server to map one user's profile to any physical access allows any mechanism to be used.

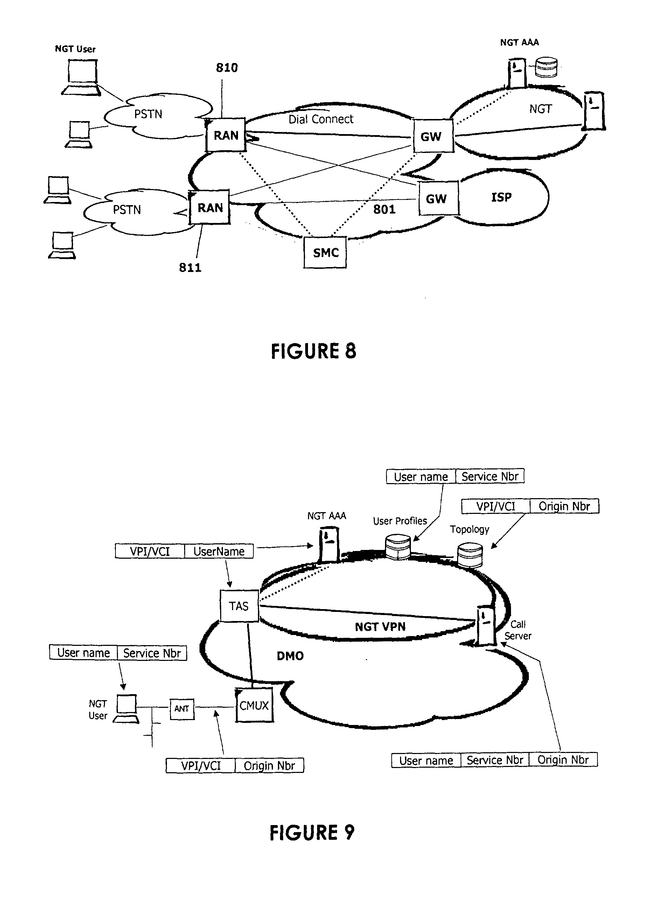

Dynamically connected NGT customers who may access NGT through a dial-up connection or always-on connection (eg ADSL or cable modem). This is illustrated with reference to Figure 8.

These customers may gain access through Dial Connect 801 for session based access. The NGT user dials up the NGT network - DNIS is used to identify the destination network. The user will be prompted by the RAN (Remote Access Node) 810, 811 for username and password and an authentication request is sent to the Dial Connect AAA proxy (the SMC). The request is passed onto the NGT AAA server and if successful, an IP address will be allocated by the SMC. The RAN now connects the user to an NGT media gateway. The NGT user connects to the Call Server to register as a H.323 or SIP client, and the Call Server can access the Dial Connect SMC or NTG AAA server to obtain username, IP address and CLI for the user and store this information in its local database.

The scenario for always-on users is very similar and as an example will be considered the case of an NGT user with ethernet connection to an ADSL NT. The user initiates a session using a dedicated ATM VC to the CMUX. The CMUX maps the VC into a VP to its Access Server (TAS) and the TAS creates a PPP tunnel to the user. The TAS prompts for username and password and sends these off with the VCI/VPI to the NGT AAA server for authentication.

It has been assumed for this example that the user is connecting to NGT. As a DMO user, NGT may be only one of many services available. The user may, have been pre-configured for NGT and identified by VCI/VPI or username used a service selection screen provided by the TAS to select NGT used a username format to select NGT - eg user@ngt

When the user has been authenticated by the NGT AAA server, an IP address is assigned to the user. The user is now authorised for access to the NGT IP-VPNs. When the user registers with a Call Server as a H.323 or SIP client, the Call Server can query the SMC as described previously to obtain IP address and the VPI/VCI for the access. The Topology database maps this to the equivalent of a CLI to provide an indication of origin - this is discussed in more detail later.

NGT users that are connected to other networks, such as the PSTN. This applies to customers that wish to use the additional services that become available on the NGT before physical migration to the NGT (where the service can be sensibly offered to a customer that does not have direct NGT access). All calls from these customers will be routed (using a preselection prefix) to the NGT via a trunking gateway or PoI gateway connected to the NGT. These gateways are known to the NGT Call Server and their gateway identifiers and port identifiers have been stored at the time of provisioning. The gateway is authorised within NGT and all calls from these gateways are screened by the Call Server to decide if the call should proceed or be dropped.

In an embodiment of the invention, addressing within NGT is based on a standard numbering plan to align with the PSTN from which calls will continue to originate and terminate. All users will have a standard number allocated at the time of subscription as an NGT user, referred to as the Service number. This number may be a ported number from a previous service or may be a newly assigned number.

The Service number allows PSTN users to reach NGT connected customers and will be used as a billing number for NGT customers. The Service number does not have any geographic significance in the way the standard PSTN number has.
Thus, where the user has a mobile terminal, there is a need for a method of identifying the geographical location of the user when the user accesses a VPN.
This specification discloses a mechanism for dealing with mobile users.

NGT users may be known to the NGT system as semi-permanently connected users, in which case, they have a statically assigned IP address associated with the gateway to which they are connected and allocated at the time of service provision. This is stored in their user profile and in the Call Server. Preferably, address resolution to an IP address do not rely on the Service number only - mnemonic aliases may also be supported for SIP Clients other name based services. The user profile maintain a relationship between Service number, mnemonic and IP address for each user.

Alternatively, the user may be a dynamic NGT users. In this case, as part of the authentication process, the user profile in the Call Server will be updated with an assigned IP address. The IP address is assigned by the Dynamic Host Control function within the SMC. The address is assigned from a pool of IP addresses and is administered by the carrier.

Accordingly, the Call Server provides the address resolution function for NGT. To achieve this the Call Server maintains a look-up table indexed on Service Number to resolve to a destination IP address. Optionally, the Call Server may further refine the resolution to identify a specific port on a gateway.

An example of address resolution provided by the Call Server is shown in Table 1.

The first two rows show how a service number is resolved to an individual user. The third row shows how a range of service numbers is resolved to a single IP address for a gateway.

Authorisation on a per call basis is handled by the Call Server. Authorisation is based on:
* data in the user's profile for NGT users. The profile contains indications of the level of incoming and outgoing call restrictions and barring options. Call barring and call restriction capability exists in the Call Server call control engine.
* signalling message content for calls
   originating/terminating from other networks.
   Authorisation of these calls is subject to the incoming/outgoing signalling parameters meeting the criteria for the call to proceed. This will be policed at the boundary of the NGT network, by Point-of-Interconnect (PoI) gateways signalling to the Call Server before call connection is initiated.

The Call Server delivers all the accounting capabilities required of the NGT. All existing PSTN/ISDN accounting capabilities are provided, with extensions to handle IP related accounting measures such as bandwidth allocation and requested/ delivered quality of service.

The Call Server provides accounting records for all calls originating in the NGT as well as calls terminating in the NGT from the carrier's PSTN, other carriers' networks, the Internet, or calls transiting the NGT.

Existing formats for the carrier's Network Charge Records and Feature Event Records are preserved as base-line accounting functionality and these are available in the existing format compatible with the carrier's billing and support systems. This provides the carrier with an initial billing capability that is off-the-shelf ready to use. Records are also available from the IN (eg. integrated into the carrier's billing systems), the Alcatel SMC (eg. integrated in the carrier's billing systems) and the Assured Access Gateways.

User mobility has been discussed with the authentication of dynamic users. These users can plug-in to the NGT through any suitable access mechanism including dial-up access.

While the user is allocated an IP address and can be located for call termination, an issue remains with assigning geographic significance to such a user. This issue is also tightly linked to the resolution of ported numbers.

When a service is provisioned for an NGT user, a Service number (and possibly a mnemonic alias also) will be an assigned to identify them as a customer. An example of a user' profile is shown in Table 2.

This profile allows the Call Server to perform a look-up on user name (domain name) to either service number or IP address.

However, if the user wishes to utilise an existing IN service that relies on origin dependency, and a significant number of IN services do, the Service number cannot be used, since it has no assigned geographic significance. A Virtual Private Network (VPN) linking customers to a supplier in the geographical vicinity of the caller via a call centre is an example of a service using origin dependency.

This invention proposes a solution based on allocation of an Origin Number that has geographic significance and is related to the identity of the access point to NGT. An origin number is allocated when a network element is provisioned, and in effect, is an equivalent of the standard numbering plan number of the ATM Virtual Circuit identity provided, for example, in a digital network. The choice of Origin Number is not arbitrary - it is selected on the geographic location of the access device connected to the edge of the DMO network. A scheme similar to Exchange Service Area number allocation that the carrier currently uses may be implemented and managed through a Cross Domain Manager. The Origin Number is added to a Topology Database when a gateway is provisioned and is added to the user's profile when the user associates with a particular Access Server or Dial Connect Remote Access Node.

Figure 9 shows where the information is stored to allow the Call Server to correlate the Service number to Origin Number.

The user profile of an NGT authorised user is extended to include the Origin number, as shown in Table 3.

The Call Server can now select the appropriate number to use to trigger an origin dependent IN service for the user. This number can be substituted for the Service Number and sent to the IN (Intelligent Network) as the calling party number. Alternatively, the Service number can be sent to the IN and the IN-SCP service logic extracts the Origin number from the User database.

This solution provides user mobility within NGT and also provides number portability for numbers known to NGT.

## Claims

1. A method of determining a geographical area from which a connection is established in a communication network, the method including adding an origin identifier tag to the message header, the Origin identifier serving to identify the location of the user.

2. A method as claimed in claim 1, wherein the origin identifier tag identifies the access point of the user at the edge of the network.

3. A method as claimed in claim 1 or claim 2, wherein the origin identifier tag is added to the User Profile by a gateway when the user connects to the network.

4. A method as claimed in any one of the preceding claims, wherein the origin identifier tag is allocated in a manner analogous to exchange service area numbers.

5. A method as claimed in any one of the preceding claims, wherein a cross domain manager is used to manage the allocation of origin identifier tags.

6. A method as claimed in any one of the preceding claims, wherein the origin identifier tag is added to a Topology database in each gateway, ready to be added to the User Profile.

7. A method as claimed in any one of claims 1 to 5, wherein the origin identifier tag is added by a LAN server to which the user is connected.

8. A packet network adapted to provide an origin identifier tag identifying a geographical area from which a connection originates, the network including message tagging means connected to the network, each including a topographical database including a corresponding origin identifier tag for addition to message headers.

9. A packet network adapted to provide an origin identifier tag identifying a geographical area from which a connection originates, the network including gateways at the edge of the network each including a topographical database including a corresponding origin identifier tag.

10. A packet network adapted to provide an origin identifier tag identifying a geographical area from which a connection originates, the network including gateways at the edge of the network each including a topographical database including a corresponding origin identifier tag.

11. A method of identifying a geographical area from which a connection originates in a packet network substantially as described with reference to the accompanying drawings.

12. A communication network adapted to identify the geographical area from which a communication originates substantially as described with reference to the accompanying drawings.
